# FASCICULE DE BREVET EUROPEEN

(11) **EP 1 399 384 B1**
(45) Date de publication et mention de la délivrance du brevet: **15.12.2004**
(21) Numéro de dépôt: 02764930.0
(22) Date de dépôt: 25.06.2002
(51) Int. Cl.: C01B 31/02, B01J 23/745, B01J 37/02, B01J 35/02

(54) **PROCEDE DE FABRICATION SELECTIVE DE NANOTUBES DE CARBONE ORDONNE EN LIT FLUIDISE**
VERFAHREN ZUR SELEKTIVEN HERSTELLUNG VON KOHLENSTOFFNANORÖHREN UNTER BENUTZUNG EINER WIRBELSCHICHTANLAGE
METHOD FOR THE SELECTIVE PRODUCTION OF ORDERED CARBON NANOTUBES IN A FLUIDISED BED

(30) Priorité: 28.06.2001 FR 0108511
(43) Date de publication de la demande: 24.03.2004
(73) Titulaire: Institut National Polytechnique de Toulouse (I.N.P.T), 31029 Toulouse cedex 4 (FR)
(72) Inventeur: SERP, Philippe, Gilles, F-31400 Toulouse (FR); FEURER, Roselyne, F-31450 Montlaur (FR); VAHLAS, Constantin, F-31500 Toulouse (FR); KALCK, Philippe, Joseph, F-31320 Auzeville-Tolosane (FR)
(74) Mandataire: Cabinet BARRE LAFORGUE & associés
(86) Numéro de dépôt international: PCT/FR2002/002195
(87) Numéro de publication internationale: WO 2003/002456

(56) Documents cités:
- EP-A- 0 147 839
- EP-A- 0 945 402
- WO-A-01/94260
- US-A- 5 500 200
- WEIDENKAFF A ET AL: "Metal nanoparticles for the production of carbon nanotube composite materials by decomposition of different carbon sources" CURRENT TRENDS IN NANOTECHNOLOGIES: FROM MATERIALS TO SYSTEMS. SYMPOSIUM S, EMRS SPRING MEETING 2001, STRASBOURG, FRANCE, 5-8 JUNE 2001, vol. C19, no. 1-2, pages 119-123, XP001066301 Materials Science & Engineering C, Biomimetic and Supramolecular Systems, 2 Jan. 2002, Elsevier, Netherlands ISSN: 0928-4931
- LIU, BAO CHUN ET AL: "Production of carbon nanotubes over pre-reduced LaCoO3 using fluidized-be reactor" CHINESE CHEMICAL LETTERS, vol. 11, no. 11, 2000, pages 1031-1034, XP008001463
- DATABASE CA [en ligne] CHEMICAL ABSTRACTS SERVICE, COLUMBUS, OHIO, US; LI, HE ET AL: "Synthesis of carbon nanotubes over in situ-reduced perovskite-type oxides" retrieved from STN Database accession no. 136:24113 CA XP002194232 & JOURNAL OF NATURAL GAS CHEMISTRY (2001), 10(3), 203-205, 2001,
- HERNADI K ET AL: "FE-CATALYZED CARBON NANOTUBE FORMATION" CARBON, ELSEVIER SCIENCE PUBLISHING, NEW YORK, NY, US, vol. 34, no. 10, 1996, pages 1249-1257, XP000634342 ISSN: 0008-6223 cité dans la demande

## Description

L'invention concerne la fabrication de nanotubes de carbone ordonné.

Les nanotubes de carbone ordonné au sens de la présente invention présentent une structure tubulaire de diamètre compris entre 0,4nm et 50nm et de longueur supérieure à 100 fois leur diamètre, notamment comprise entre 1000 et 100 000 fois leur diamètre. Ils peuvent se présenter soit associés à des particules de catalyseur métallique, soit isolés de ces particules. Les nanotubes de carbone ont été décrits depuis longtemps (S.Iijima "Helical nanotubules of graphitic carbon" Nature, 354, 56 (1991)), mais ne font pas encore l'objet d'une exploitation à l'échelle industrielle. Ils pourraient néanmoins faire l'objet de nombreuses applications, et notamment être grandement utiles et avantageux dans la fabrication de matériaux composites, d'écrans plats, de pointes pour microscopes à force atomique, le stockage d'hydrogène ou d'autres gaz, à titre de supports catalytiques...

US-4 663 230 et US-5 500 200 décrivent un procédé de préparation catalytique de fibrilles de carbone par décomposition à haute température d'une source de carbone gazeuse en contact avec un catalyseur solide sous forme de particules métalliques de 3,5nm à 70nm, comprenant au moins un métal de transition, portées par des grains de support solide de moins de 400µm. Selon ces documents, les fibrilles obtenues comprendraient une âme interne de carbone moins ordonné entourée d'une région externe de carbone ordonné, et auraient un diamètre qui varie entre 3,5nm et 70nm. US-5 500 200 mentionne que le procédé pour obtenir ces fibrilles peut être effectué en lit fluidisé, mais ne fournit aucun exemple d'un tel procédé. Tous les exemples mentionnés sont réalisés avec un lit fixe, produisent un rendement médiocre par rapport à la source de carbone (< 20% en poids), et les caractéristiques réelles des produits obtenus ne sont pas données. Ces documents ne fournissent donc aucun enseignement réel relatif à la fabrication de réels nanotubes de carbone ordonné et/ou à l'utilisation d'un lit fluidisé pour la fabrication de tels nanotubes.

D'autres documents enseignent la fabrication de nanotubes de carbone monoparoi à l'aide d'une composition catalytique formée de particules métalliques, soit portées par des grains de support déposés dans une coupelle (WO-0017102), soit introduites sous forme d'aérosol (WO-9906618) dans un réacteur alimenté par un gaz source de carbone tel que le monoxyde de carbone ou l'éthylène. Les rendements (nanotubes produits par rapport à la source de carbone) obtenus avec de tels procédés sont très faibles, et une certaine quantité de particules de carbone pyrolitique ou amorphe est produite. Or, il est important, pour permettre l'exploitation industrielle pratique des nanotubes de carbone, d'en maîtriser précisément à la fois les caractéristiques dimensionnelles, les rendements de production, et la pureté du produit obtenu.

WO 01/94260, publiée le 13 décembre 2001, décrit un procédé et un appareil de fabrication de nanotubes de carbone en plusieurs étapes, dont une étape préliminaire de traitement du catalyseur pour en extraire l'air suivie d'une étape de réduction du catalyseur. Avec un tel procédé, il est aussi nécessaire d'éliminer le carbone amorphe formé par la réaction, qui n'est donc pas sélective vis-à-vis des nanotubes formés.

US-4 650 657 et US-4 767 737 décrivent un procédé de fabrication d'un matériau carboné fibreux contenant un composant métallique ferreux dans un lit fluidisé par décomposition du monoxyde de carbone en présence d'hydrogène et d'un gaz neutre tel que l'azote, d'une poudre de catalyseur métallique ferreux et en présence d'un abrasif tel que l'alumine qui peut faire office de support. Ces documents indiquent qu'un tel lit fluidisé a pour effet d'enlever le carbone formé de la surface des grains, de favoriser la fragmentation et de minimiser la taille de la masse réactive du lit fluidisé. Ces documents ne décrivent pas un procédé applicable à la fabrication de nanotubes de carbone. Au contraire, les produits obtenus sont des particules de carbone de 1µ à 50µ de dimension moyenne (Tableau 1 de US-4 650 657).

La publication "Fe-catalyzed carbon nanotubes formation" K. Hemadi et *al*, Carbon, 34, No 10, (1996), 1249-1257, décrit un procédé de préparation de nanotubes de carbone sur différents catalyseurs en lit fixe ou dans un réacteur dit "lit fluidisé" de 6,4mm de diamètre. Un tel diamètre ne peut pas produire un véritable lit fluidisé. Les catalyseurs sont préparés par imprégnation. Ce procédé limité à une exploitation à l'échelle du laboratoire produit du carbone amorphe, et enseigne que l'utilisation d'un tel "lit fluidisé" serait moins adaptée que celle d'un lit fixe.

Par ailleurs, FR-2 707 526 décrit un procédé de préparation d'un catalyseur par dépôt chimique en phase vapeur de particules métalliques de moins de 2nm dans un lit fluidisé de grains de support poreux à moins de 200°C. Ce document décrit plus particulièrement la préparation d'un catalyseur au rhodium et ne décrit pas un catalyseur adapté à l'obtention de nanotubes de carbone.

L'invention vise donc à proposer un procédé de fabrication sélective de véritables nanotubes de carbone ordonné, de dimensions moyennes homogènes (peu dispersées autour d'une valeur moyenne) dans des conditions compatibles avec une exploitation à l'échelle industrielle, notamment en termes de rendement par rapport à la source de carbone, d'activité catalytique et de coûts de production, et de pureté en nanotubes du produit obtenu.

L'invention vise aussi à proposer un tel procédé dans lequel les caractéristiques des nanotubes produits peuvent être prévues et ajustées par modification simple de paramètres de mise en oeuvre du procédé.

L'invention vise plus particulièrement à proposer un tel procédé dont le rendement en nanotubes produits par rapport à la source de carbone est supérieur ou égal à 80% en poids.

L'invention vise aussi à proposer une composition granulaire catalytique pouvant être utilisée dans un procédé de fabrication de nanotubes de carbone ordonné selon l'invention, ainsi qu'un procédé de préparation d'une telle composition granulaire catalytique.

(Dans tout le texte, tous les termes et critères relatifs aux caractéristiques des lits fluidisés sont pris au sens donné par l'ouvrage de référence "Fluidization Engineering", Kunii, D. ; Levenspiel, O. ; Butterworth-Heinemann Edition 1991).

Pour ce faire, l'invention concerne un procédé de fabrication sélective de nanotubes de carbone ordonné par décomposition d'une source de carbone à l'état gazeux mise en contact d'au moins un catalyseur solide sous forme de particules métalliques comprenant au moins un métal de transition portées par des grains de support solide, ces grains de support portant les particules métalliques étant dits grains de catalyseur, adaptés pour pouvoir former un lit fluidisé, les particules métalliques ayant une dimension moyenne comprise entre 1nm et 10nm, telle que mesurée après activation par chauffage à 750°C, dans lequel on réalise un lit fluidisé des grains de catalyseur dans un réacteur, dit réacteur de croissance (30), et on délivre en continu la source de carbone dans le réacteur de croissance (30) au contact des grains de catalyseur dans des conditions propres à assurer la fluidisation du lit de grains de catalyseur, la réaction de décomposition et la formation de nanotubes,
caractérisé en ce que :
- on fabrique au préalable les grains de catalyseur de chaque catalyseur par dépôt de particules métalliques sur des grains de support dans un lit fluidisé des grains de support réalisé dans un réacteur, dit réacteur de dépôt (20) alimenté par au moins un précurseur apte à former les particules métalliques, et de façon à obtenir des grains de catalyseur comprenant une proportion en poids des particules métalliques comprise entre 1 % et 5%,
- on place ensuite les grains de catalyseur dans le réacteur de croissance (30) sans mise en contact avec l'atmosphère extérieure, puis on réalise le lit fluidisé des grains de catalyseur et la formation de nanotubes dans le réacteur de croissance (30).

Les inventeurs ont en effet constaté avec surprise que, contrairement à l'enseignement de US-4650657 ou US-4767737, l'emploi d'un lit fluidisé pour préparer le(s) catalyseur(s) et d'un autre lit fluidisé pour préparer les nanotubes, sans mise en contact du(des) catalyseur(s) avec l'atmosphère, dans les conditions de l'invention, non seulement n'aboutit pas à la fragmentation des produits carbonés croissant sur les grains, mais au contraire permet de former sélectivement des nanotubes de carbone ordonné de dimensions très homogènes (peu dispersées autour de la moyenne) et avec un rendement par rapport à la source de carbone de plus de 80% en poids.

Le catalyseur ne subit aucune pollution atmosphérique, et notamment n'est pas oxydé, entre sa préparation et son utilisation dans le réacteur de croissance.

Avantageusement et selon l'invention, le réacteur de dépôt et le réacteur de croissance sont distincts. Avantageusement et selon l'invention, on relie le réacteur de dépôt et le réacteur de croissance par au moins une conduite étanche et on alimente le réacteur de croissance en grains de catalyseur par cette conduite. En variante, on peut récupérer et transférer les grains du catalyseur à partir du réacteur de dépôt sous atmosphère inerte. Avantageusement et selon l'invention, on fabrique les grains de catalyseur par dépôt chimique en phase vapeur.

Selon une autre variante possible de l'invention, on peut utiliser un seul et même réacteur à titre de réacteur de dépôt et de réacteur de croissance. Autrement dit, on réalise les deux étapes de préparation des grains de catalyseur (dépôt) puis de fabrication des nanotubes de carbone (croissance) successivement dans un seul et même réacteur, en modifiant les gaz et réactifs à l'entrée du réacteur ainsi que les paramètres de fonctionnement entre les deux étapes.

Avantageusement et selon l'invention, on réalise le lit fluidisé des grains de catalyseur dans un réacteur de croissance cylindrique de diamètre supérieur à 2cm et présentant une hauteur de parois apte à contenir 10 à 20 fois le volume du lit initial non fluidisé des grains de catalyseur tel que déterminé en l'absence de toute alimentation gazeuse. Un tel réacteur permet la réalisation d'un véritable lit fluidisé.

Avantageusement et selon l'invention, on réalise un lit fluidisé des grains de catalyseur en régime de bullage au moins sensiblement exempt de renardage.

Par ailleurs, avantageusement et selon l'invention, pour réaliser le lit fluidisé de grains de catalyseur :
- on forme un lit de grains de catalyseur dans le fond du réacteur de croissance,
- on alimente le réacteur de croissance sous le lit de grains de catalyseur avec au moins un gaz dont la vitesse est supérieure à la vitesse minimale de fluidisation du lit de grains de catalyseur et inférieure à la vitesse minimale d'apparition d'un régime piston.

Avantageusement et selon l'invention, pour réaliser le lit fluidisé des grains de catalyseur, on alimente le réacteur de croissance sous les grains de catalyseur avec la source de carbone à l'état gazeux, et au moins un gaz vecteur neutre.

Plus particulièrement, avantageusement et selon l'invention, on alimente le réacteur de croissance avec au moins un précurseur carboné formant la source de carbone, au moins un gaz réactif, et au moins un gaz neutre, que l'on mélange avant introduction dans le réacteur de croissance. Par "gaz réactif', on entend un gaz tel que l'hydrogène susceptible de participer et favoriser la production de nanotubes.

Avantageusement et selon l'invention, la source de carbone comprend au moins un précurseur carboné choisi parmi les hydrocarbures. Parmi les hydrocarbures pouvant être avantageusement utilisés, on peut citer l'éthylène et le méthane. En variante ou en combinaison, on peut néanmoins aussi utiliser un oxyde de carbone, notamment le monoxyde de carbone.

Avantageusement et selon l'invention, le rapport molaire du(des) gaz réactif(s) sur le(les) précurseur(s) carboné(s) est supérieur à 0,5 et inférieur à 10 -notamment de l'ordre de 3-.

Avantageusement et selon l'invention, on alimente le réacteur de croissance (30) avec un débit de précurseur(s) carboné(s) compris entre 5% et 80% -notamment de l'ordre de 25%- du débit total gazeux.

Avantageusement et selon l'invention, on place le lit fluidisé à une température comprise entre 600°C et 800°C.

L'invention s'étend à une composition granulaire catalytique adaptée à la mise en oeuvre d'un procédé de fabrication selon l'invention.

L'invention concerne donc une composition granulaire catalytique comprenant des particules métalliques comprenant au moins un métal de transition portées par des grains de support solide, dits grains de catalyseur,
caractérisée en ce que :
- les grains de catalyseur sont adaptés pour pouvoir former un lit fluidisé,
- la proportion en poids de particules métalliques est comprise entre 1% et 5%,
- les particules métalliques ont une dimension moyenne de particule comprise entre 1nm et 10nm, telle que mesurée après chauffage à 750°C.

Dans tout le texte, la "dimension moyenne" des particules ou des grains est la valeur moyenne (maximum de la courbe de distribution des dimensions des particules ou grains) des dimensions de toutes les particules ou grains telle que déterminée par granulométrie traditionnelle -notamment par la vitesse de sédimentation- avant utilisation. Le terme "dimension" utilisé isolément désigne, pour une particule donnée ou un grain donné, sa plus grande dimension réelle telle que déterminée, par exemple par mesures statiques grâce à des observations au microscope électronique à balayage ou à transmission, avant utilisation également.

En ce qui concerne les particules métalliques, les valeurs de la dimension ou de la dimension moyenne qui sont données dans tout le texte sont celles mesurées avant utilisation pour la fabrication des nanotubes, mais après chauffage de la composition catalytique à 750°C. Les inventeurs ont en effet constaté que les dimensions des particules avant chauffage ne sont, en général, pas accessibles à l'analyse, les particules étant invisibles au microscope. Cette opération se fait par mise en contact avec une atmosphère neutre, par exemple d'hélium et/ou d'azote, à 750°C, pendant une durée suffisante pour obtenir des valeurs stabilisées de dimensions. Cette durée est en pratique très faible (de l'ordre de la minute ou de quelques minutes). L'activation peut être réalisée en lit fluidisé (dans le lit fluidisé des grains de catalyseur avant alimentation de la source de carbone) ou de toute autre manière, par exemple en lit fixe. En outre, la température de 750°C doit être considérée uniquement comme une valeur pour la mesure de la taille des particules et ne correspond pas à une valeur de température devant nécessairement être mise en oeuvre dans un procédé selon l'invention ou pour obtenir une composition catalytique selon l'invention (même si cette valeur peut avantageusement être celle utilisée dans certains modes de réalisation de l'invention). Autrement dit, elle permet uniquement de caractériser l'invention par des critères de dimensions, mais une composition catalytique non soumise à cette température exacte peut aussi être conforme à l'invention.

Avantageusement, la composition granulaire catalytique selon l'invention est caractérisée en ce que la dimension moyenne des particules métalliques est comprise entre 2nm et 8nm -notamment de l'ordre de 4 à 5 nm-, et en ce que, pour au moins 97% en nombre des particules métalliques, la différence entre leur dimension et la dimension moyenne des particules métalliques est inférieure ou égale à 5nm -notamment de l'ordre de 3nm-.

La composition granulaire catalytique peut comprendre une faible proportion de particules métalliques de dimension très nettement supérieure à la dimension moyenne (typiquement de plus de 200% de la dimension moyenne). Néanmoins, avantageusement et selon l'invention, la dimension des particules métalliques est inférieure à 50nm, telle que mesurée avant utilisation et mise en place du lit fluidisé, et après activation à 750°C.

Avantageusement et selon l'invention, les particules métalliques sont constituées à au moins 98% en poids d'au moins un métal de transition et sont sensiblement exemptes d'éléments non métalliques autres que des traces de carbone et/ou d'oxygène et/ou d'hydrogène et/ou d'azote. Plusieurs métaux de transition différents peuvent être utilisés pour être déposés sur les grains de support. De même, plusieurs compositions catalytiques distinctes selon l'invention (dont les grains de support et/ou les particules métalliques ont des caractéristiques distinctes) peuvent être utilisées en mélange. Les traces d'impureté peuvent provenir du procédé de préparation des particules métalliques. Outre ces traces, les 2% maximum restant peuvent comprendre un ou plusieurs élément(s) métallique(s) autre(s) qu'un métal de transition. De préférence, avantageusement et selon l'invention, les particules métalliques sont constituées d'un dépôt métallique pur d'au moins un métal de transition, aux traces près. Avantageusement et selon l'invention, la proportion en poids de particules -notamment du fer- métalliques est comprise entre 1,5% et 4%.

Avantageusement et selon l'invention, les grains de catalyseur ont une dimension moyenne comprise entre 10µ et 1000µ. Avantageusement et selon l'invention, la différence entre la dimension des grains de catalyseur et la dimension moyenne des grains de catalyseur est inférieure à 50% de la valeur de ladite dimension moyenne.

Il a été trouvé en effet que ces distributions dimensionnelles des particules métalliques et des grains permettent, dans le cadre d'un lit fluidisé, d'obtenir d'excellents résultats.

En outre, avantageusement et selon l'invention, le support présente une surface spécifique supérieure à 10m²/g. Avantageusement et selon l'invention, le support est un matériau poreux présentant une taille moyenne de pores supérieure à la dimension moyenne des particules métalliques. Avantageusement et selon l'invention, le support est un matériau mésoporeux, les pores ayant une taille moyenne inférieure à 50nm. Avantageusement et selon l'invention, le support est choisi parmi l'alumine (Al₂O₃), un charbon actif, la silice, un silicate, la magnésie (MgO), l'oxyde de titane (TiO₂), la zircone (ZrO₂), une zéolithe ou un mélange de grains de plusieurs de ces matériaux.

En particulier, dans le cas où la source de carbone est de l'éthylène, avantageusement et selon l'invention, les particules métalliques sont constituées de fer pur déposé à l'état dispersé sur des grains d'alumine.

Avantageusement, dans un procédé de fabrication de nanotubes selon l'invention, on fabrique au préalable les grains de catalyseur par dépôt chimique en phase vapeur des particules métalliques sur les grains de support dans un lit fluidisé des grains de support alimenté par au moins un précurseur apte à former les particules métalliques.

L'invention s'étend à un procédé de préparation d'une composition granulaire catalytique selon l'invention.

L'invention concerne donc un procédé de préparation d'une composition granulaire catalytique comprenant des particules métalliques comprenant au moins un métal de transition portées par des grains de support solide, dits grains de catalyseur, dans lequel on réalise un dépôt chimique en phase vapeur des particules métalliques sur les grains de support,
caractérisé en ce qu'on réalise le dépôt -notamment sous forme d'un dépôt chimique en phase vapeur- des particules métalliques sur les grains de support dans un lit fluidisé des grains de support alimenté par au moins un précurseur apte à former les particules métalliques, et en ce qu'on choisit les grains de support et on ajuste les paramètres du dépôt de telle sorte que :
- les grains de catalyseur sont adaptés pour pouvoir former un lit fluidisé,
- la proportion en poids des particules métalliques est comprise entre 1 % et 5%,
- les particules métalliques ont une dimension moyenne de particule comprise entre 1nm et 10nm, telle que mesurée après chauffage à 750°C.

Avantageusement et selon l'invention, on réalise le dépôt à une température comprise entre 200°C et 300°C.

Avantageusement et selon l'invention, on alimente le lit fluidisé des grains de support par au moins un précurseur organométallique - notamment Fe(CO)₅-.

Avantageusement et selon l'invention, on dilue en continu le(s) précurseur(s) à l'état de vapeurs dans un mélange gazeux que l'on délivre en continu dans un réacteur de dépôt dans des conditions propres à assurer la fluidisation des grains de support. Ainsi, avantageusement et selon l'invention, le lit fluidisé est alimenté en continu en précurseur(s). Avantageusement et selon l'invention, le mélange gazeux comprend un gaz neutre et au moins un gaz réactif. Avantageusement et selon l'invention, on utilise de la vapeur d'eau à titre de gaz réactif. Entre 200°C et 300°C, l'eau permet en effet de décomposer le précurseur Fe(CO)₅ en libérant les atomes de Fe. On évite de surcroît tout phénomène de frittage et d'agglomération du catalyseur métallique en particules métalliques de dimensions trop grandes.

L'invention concerne aussi un procédé de fabrication de nanotubes, une composition granulaire catalytique et un procédé de préparation d'une composition granulaire catalytique caractérisés en combinaison par tout ou partie des caractéristiques mentionnées ci-dessus ou ci-après.

D'autres buts, avantages et caractéristiques de l'invention apparaissent de la description et des exemples qui suivent, qui se réfèrent aux figures annexées dans lesquelles :
- la figure 1 est un schéma d'une première variante d'une installation de mise en oeuvre d'un procédé de fabrication de nanotubes selon l'invention,
- la figure 2 est un schéma d'une deuxième variante d'une installation d'un procédé de fabrication de nanotubes selon l'invention,
- la figure 3 est un histogramme des dimensions des particules métalliques d'une composition catalytique selon l'invention obtenue à l'exemple 5,
- les figures 4 et 5 sont des micrographies des nanotubes obtenus selon l'invention comme décrit à l'exemple 9.

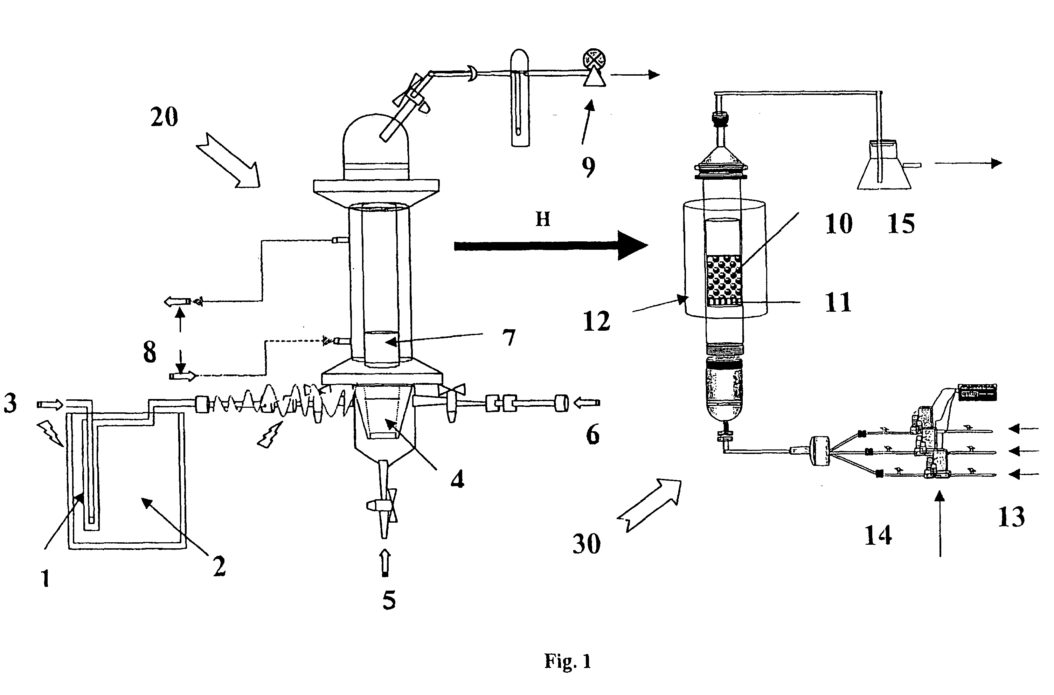

La figure 1 est un schéma d'une installation permettant la mise en oeuvre d'un procédé de fabrication de nanotubes selon l'invention. Cette installation comprend deux réacteurs : un réacteur, dit réacteur de dépôt 20, pour la synthèse du catalyseur, et un réacteur, dit réacteur de croissance 30, pour la préparation des nanotubes.

Le réacteur de dépôt 20 pour la synthèse du catalyseur par dépôt chimique en phase vapeur (CVD) comprend un sublimateur en verre 1 dans lequel est introduit le précurseur organométallique. Ce sublimateur comprend une plaque frittée et peut être porté à la température désirée par un bain chauffé 2.

Le gaz vecteur 3 neutre, par exemple de l'hélium, qui entraîne les vapeurs du précurseur organométallique utilisé est stocké dans une bouteille et admis dans le sublimateur 1 à l'aide d'un régulateur de débit (non représenté).

Le sublimateur 1 est relié à un compartiment en verre 4 inférieur, qui comprend une plaque frittée, dans lequel est introduite de la vapeur d'eau qui sert à activer la décomposition du précurseur organométallique. La présence d'eau permet d'obtenir un catalyseur très actif. Ce compartiment 4 présente une double enveloppe thermostatée à une température qui peut être ajustée au moyen d'un régulateur de température (non représenté). La vapeur d'eau est entraînée par et avec un gaz vecteur 5 neutre, par exemple de l'azote, stocké dans une bouteille et admis dans le compartiment 4 à l'aide d'un régulateur de débit (non représenté). Une alimentation en gaz vecteur 6 neutre, par exemple de l'azote, est destinée à ajuster les débits de façon à se trouver dans les conditions de fluidisation. Ce gaz vecteur 6 est stocké dans une bouteille et admis dans le compartiment 4 à l'aide d'un régulateur de débit (non représenté).

La partie haute du compartiment 4 est raccordée de façon étanche à une colonne de fluidisation 7 en verre de 5 cm de diamètre, qui est dotée à sa base d'un distributeur de gaz. Cette colonne 7 à double enveloppe est thermostatée à une température qui peut être ajustée au moyen d'un régulateur de température 8.

La partie haute de la colonne 7 est reliée à une pompe à vide 9 par l'intermédiaire d'un piège, pour retenir les gaz de décomposition libérés.

Le protocole de mise en oeuvre des exemples concernant la préparation des catalyseurs par CVD est le suivant :

Une masse Ma de précurseur est introduite dans le sublimateur 1.

Une masse Ms de grains de support Ms est versée dans la colonne 7 et une masse d'eau Me est introduite dans le compartiment 4 à l'aide d'une seringue. Le vide est fait dans l'ensemble formé du compartiment 4 et de la colonne 7. La température du lit est portée à Tl.

Le sublimateur 1 est porté à la température Ts et la pression est fixée à la valeur Pa dans l'ensemble de l'appareillage par introduction des gaz vecteurs 3, 5 et 6 (débit total Q). Le dépôt commence alors et dure un temps t_{c}.

En fin de dépôt, la température est ramenée à la température ambiante par lent refroidissement et la pompe à vide 9 est arrêtée. Une fois le système revenu à température ambiante et pression atmosphérique, la composition granulaire catalytique est sortie de la colonne 7 sous atmosphère de gaz inerte (par exemple de l'azote) : elle est prête à être utilisée pour la fabrication des nanotubes.

Deux variantes du réacteur de croissance 30, de diamètres différents, ont été utilisées dans les exemples pour la croissance des nanotubes.

Dans la première variante représentée figure 1, le réacteur de croissance 30 est composé d'une colonne de fluidisation en quartz (2,5cm de diamètre) 10 dotée en son milieu d'une plaque distributrice (frittée en quartz) 11 sur laquelle on place la poudre de composition granulaire catalytique. La colonne 10 peut être portée à la température désirée à l'aide d'un four 12 extérieur qui peut coulisser verticalement le long de la colonne de fluidisation 10. Dans le protocole utilisé, ce four 12 a soit une position haute où il ne chauffe pas le lit fluidisé, soit une position basse où il assure le chauffage du lit. Les gaz 13 (gaz neutre tel que l'hélium, source de carbone et hydrogène) sont stockés dans des bouteilles et sont admis dans la colonne de fluidisation à l'aide de régulateurs de débit 14.

En partie haute, la colonne de fluidisation 10 est raccordée de façon étanche à un piège 15 destiné à collecter d'éventuelles particules fines de composition granulaire catalytique ou d'un mélange de composition granulaire catalytique et de nanotubes.

La hauteur de la colonne 10 est adaptée pour contenir, en fonctionnement, le lit fluidisé des grains de catalyseur. En particulier, elle est au moins égale à 10 à 20 fois la hauteur initiale du lit de grains de catalyseur déterminée en l'absence d'alimentation gazeuse, et doit correspondre à la zone chauffée. Dans les exemples, on choisit une colonne 10 de 70 cm de hauteur totale, chauffée sur 60 cm de hauteur par le four 12.

Dans la deuxième variante non représentée, le réacteur de croissance est composé d'une colonne de fluidisation en inox (de 5 cm de diamètre et de lm de hauteur totale chauffée sur toute sa hauteur) dotée à sa base d'une plaque distributrice (inox) sur laquelle on place la poudre de catalyseur. La colonne peut être portée à la température désirée à l'aide de deux fours fixes et la température de consigne est contrôlée par un thermocouple plongeant dans le lit fluidisé. Les gaz (gaz neutre, source de carbone et hydrogène) sont stockés dans des bouteilles et sont admis dans la colonne de fluidisation à l'aide de régulateurs de débit.

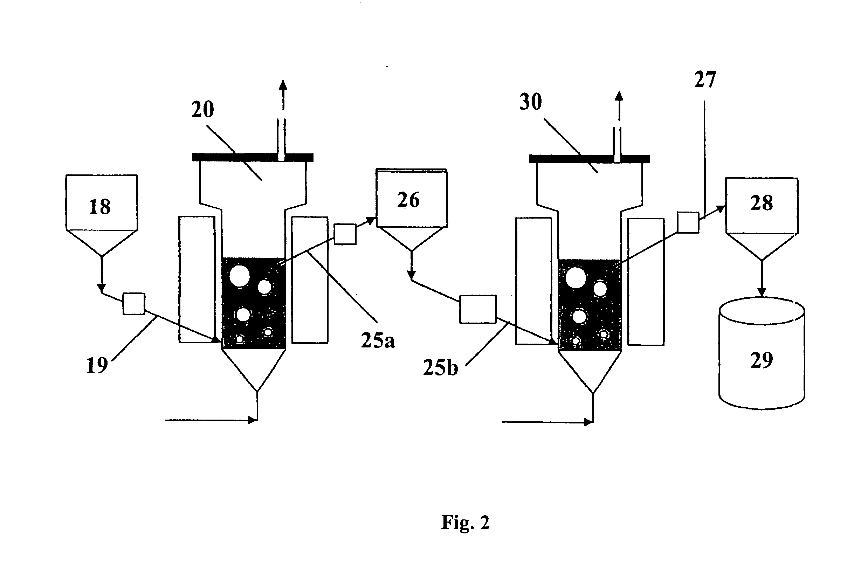

La figure 2 représente une variante d'un procédé selon l'invention dans laquelle la composition granulaire catalytique est préparée, selon l'invention, en continu dans le réacteur de dépôt 20, soutirée en continu de ce réacteur de dépôt 20 par une conduite 25a par laquelle elle est introduite dans un réservoir tampon intermédiaire 26, à partir duquel elle est alimentée en continu, par une conduite 25b, dans le réacteur de croissance 30 où les nanotubes sont fabriqués. Le réacteur de dépôt 20 est alimenté en continu en grains de support par une conduite 19 à partir d'un réservoir 18. La poudre de grains de catalyseur sur lesquels les nanotubes sont accrochés est soutirée en continu du réacteur de croissance 30 par une conduite 27 d'extraction qui aboutit à un réservoir tampon 28. Les nanotubes peuvent ensuite être séparés des grains de support et des particules métalliques, de façon connue, puis stockés dans un réservoir 29 de stockage.

Dans les variantes représentées sur les figures, on utilise un réacteur de croissance 30 distinct du réacteur de dépôt 20. En variante non représentée, on peut utiliser le réacteur de dépôt 20 pour réaliser ensuite la croissance des nanotubes, dans une étape ultérieure. Néanmoins, cette dernière variante oblige à réaliser les deux étapes successivement avec des paramètres de fonctionnement différents, et la réaction de croissance risque d'être perturbée, notamment dans sa phase initiale, par des sous-produits résiduels de l'étape de dépôt.

Le protocole de mise en oeuvre des exemples concernant la fabrication de nanotubes selon l'invention est le suivant :

Une masse Mc de catalyseur (composition granulaire catalytique selon l'invention) est introduite dans la colonne de fluidisation 10 sous atmosphère de gaz inerte.

Le four 12 étant en position basse par rapport au lit catalytique, sa température est portée à la valeur désirée Tn pour la synthèse des nanotubes, soit sous atmosphère de gaz inerte, soit sous atmosphère d'un mélange de gaz inerte et d'hydrogène (gaz réactif).

Lorsque cette température est atteinte, la source de carbone, l'hydrogène et un complément de gaz neutre sont introduits dans la colonne 10. Le débit total Q_{T} assure au lit un régime de bullage à la température Tn, sans renardage.

La croissance des nanotubes commence alors et durera un temps tₙ.

A la fin de la croissance, le four 12 est placé en position haute par rapport au lit catalytique, les débits de gaz correspondant à la source de carbone et à l'hydrogène sont arrêtés et la température est ramenée à la température ambiante par lent refroidissement.

Dans le cas du réacteur à fours fixes, le protocole est similaire.

Les nanotubes de carbone associés aux particules métalliques et accrochés aux grains de support sont extraits du réacteur de croissance 30 et stockés sans précaution particulière. Les nanotubes de carbone peuvent ensuite être séparés des particules métalliques et des grains de support pour se présenter à l'état purifié, par exemple par dissolution acide comme décrit par WO 01/94260.

La quantité de carbone déposée est mesurée par pesée et par analyse thermique gravimétrique.

Les nanotubes ainsi fabriqués sont analysés par microscopie électronique à transmission (MET) et microscopie électronique à balayage (MEB) pour les mesures de taille et dispersion et par cristallographie aux rayons X et spectroscopie Raman pour évaluer la cristallinité des nanotubes.

### EXEMPLES

### Préparation des catalyseurs

### Exemple comparatif 1

On prépare un catalyseur à 2,6 % Fe/Al₂O₃ par une méthode connue d'imprégnation liquide de sels métalliques. Le précurseur du fer est le nitrate de fer hydraté Fe(NO₃)₃,9H₂O. Les grains de support en alumine ont une granulométrie moyenne de 120µ, une masse volumique de 1,19g/cm³ et une surface spécifique de 155m²/g. Le gaz vecteur est de l'azote. La mise en oeuvre de la préparation du catalyseur est la suivante :

Le support est une alumine mésoporeuse. 100g de ce support sont déshydratés sous vide durant 120 min. La quantité appropriée de sel pour obtenir 2,6 % Fe/Al₂O₃ est mise en contact avec l'alumine dans 250 cm³ d'éthanol désaéré. Après 3 h de temps de contact, le solvant est évaporé et le catalyseur est séché une nuit sous pression réduite (0,1 Torr). Le catalyseur est ensuite calciné à 500°C durant 2 h, puis réduit sous un mélange azote/hydrogène (80/20 en volume) durant 2 h à 650°C.

Le produit obtenu présente une dimension moyenne des particules métalliques égales à 13 nm et la variation des dimensions des particules métalliques par rapport à cette valeur est pour au moins 98% d'entre elles, au maximum de l'ordre de 11 nm.

### Exemple 2

On prépare un catalyseur à 2,6 % Fe/Al₂O₃, conformément au procédé selon l'invention, dans le réacteur de dépôt 20, comme indiqué ci-dessus mais sans utiliser d'eau pour activer la décomposition du précurseur. Le précurseur organométallique utilisé est le complexe Fe(CO)₅, alors que, les grains de support et le gaz vecteur utilisé sont les mêmes que dans l'exemple 1. Les différents paramètres sont ajustés comme suit :
Ma = 9,11 g,
Ms = 100 g,
Tl = 220°C,
Pa = 22 Torr,
Ts = 35°C,
Q = 82 cm³/min,
t_{c} = 15 min

Le produit obtenu (composition granulaire catalytique selon l'invention) présente des particules métalliques déposées sur les grains. La dimension des particules métalliques après chauffage sous azote à 750°C durant 5 minutes est égale à 4 nm et la variation des dimensions des particules métalliques par rapport à cette valeur est pour au moins 97% d'entre elles, au maximum de l'ordre de 3,5 nm.

### Exemple 3

On prépare un catalyseur à 1,3 % Fe/Al₂O₃ selon l'invention. Le gaz vecteur est de l'azote. Le précurseur organométallique, les grains de support et le gaz vecteur utilisés sont les mêmes que dans l'exemple 2. Les différents paramètres sont ajustés comme suit :
Ma = 7,12 g,
Ms = 150 g,
Me = 10 g,
Tl = 220°C,
Pa = 26 Torr,
Ts = 35°C,
Q = 82 cm³/min,
t_{c} = 7 min

Le produit obtenu présente une dimension moyenne des particules égale à 3 nm et la variation des dimensions des particules métalliques par rapport à cette valeur est pour au moins 98% d'entre elles, au maximum de l'ordre de 2,5 nm.

### Exemple 4

Cet exemple vise la préparation d'un catalyseur à 2,5 % Fe/Al₂O₃. Le précurseur organométallique, les grains de support et le gaz vecteur utilisés sont les mêmes que dans l'exemple 2. Les différents paramètres sont ajustés comme suit :
Ma = 17,95 g,
Ms = 200 g,
Me = 25 g,
Tl = 220°C,
Pa = 20 Torr,
Ts = 35°C,
Q = 82 cm³/min,
t_{c} = 18 min

Le produit obtenu présente une dimension moyenne des particules métalliques égale à 4 nm et la variation des dimensions des particules métalliques par rapport à cette valeur est pour au moins 98% d'entre elles, au maximum de l'ordre de 3,5 nm.

### Exemple 5

Cet exemple vise la préparation d'un catalyseur à 3,5 % Fe/Al₂O₃. Le précurseur organométallique, les grains de support et le gaz vecteur utilisé sont les mêmes que dans l'exemple 2. Les différents paramètres sont ajustés comme suit :
Ma = 12,27 g,
Ms = 100 g,
Me = 25 g,
Tl = 220°C,
Pa = 24 Torr,
Ts = 35°C,
Q = 82 cm³/min,
t_{c} = 20 min

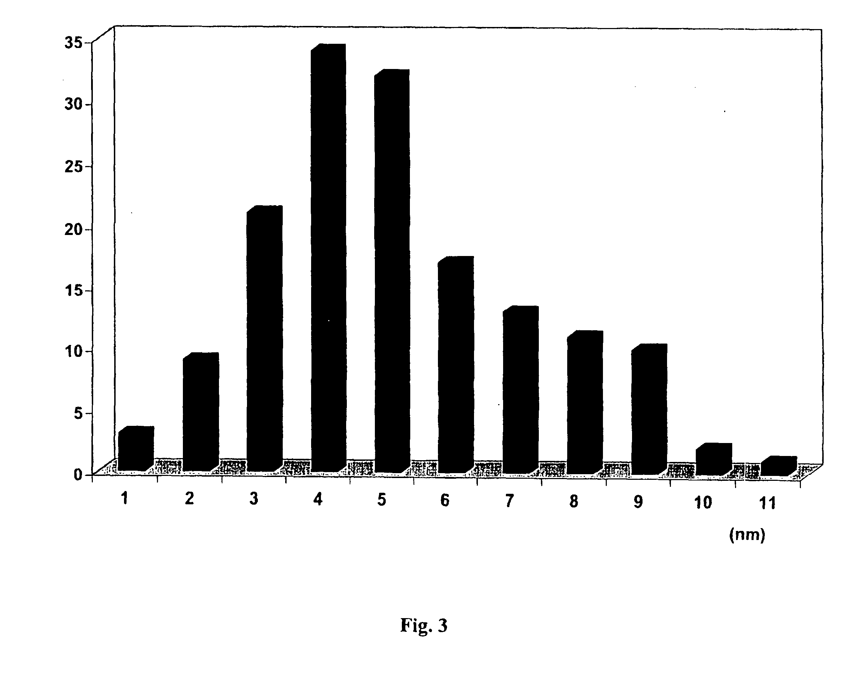

Le produit obtenu présente une dimension moyenne des particules égale à 5 nm et la variation des dimensions des particules métalliques par rapport à cette valeur est pour au moins 98% d'entre elles, au maximum de l'ordre de 4,5 nm. Un histogramme des tailles de particules est donné sur la figure 3. Sur cette figure, la dimension moyenne des particules est portée en abscisses et leur nombre est porté en ordonnées.

### Exemple 6

Cet exemple vise la préparation d'un catalyseur à 5,65 % Fe/Al₂O₃. Le précurseur organométallique, les grains de support et le gaz vecteur utilisés sont les mêmes que dans l'exemple 2. Les différents paramètres sont ajustés comme suit :
Ma = 9,89 g,
Ms = 100 g,
Me = 15 g,
Tl = 220°C,
Pa = 23 Torr,
Ts = 35°C,
Q = 82 cm³/min,
t_{c} = 23 min

Le produit obtenu présente une dimension moyenne des particules égale à 6 nm et la variation des dimensions des particules métalliques par rapport à cette valeur est pour au moins 98% d'entre elles, au maximum de l'ordre de 5,5 nm.

Les résultats des exemples 1 à 6 sont résumés sur le Tableau I ci-après.

**Tableau I**

| Exemple | Précurseur | Méthode | % Fe | Taille des particules métalliques (nm) |
|---|---|---|---|---|
| 1 | Fe(NO₃)₃,9H₂O | imprégnation | 2,6 | 13±11 |
| 2 | Fe(CO)₅ | CVD* | 2,6 | 4,5±4 |
| 3 | Fe(CO)₅ | CVD | 1,3 | 3±2,5 |
| 4 | Fe(CO)₅ | CVD | 2,5 | 4±3,5 |
| 5 | Fe(CO)₅ | CVD | 3,50 | 5±4,5 |
| 6 | Fe(CO)₅ | CVD | 5,65 | 6±5,5 |

| | | | | |
|---|---|---|---|---|
| *Préparation sans ajout d'eau | | | | |

### Fabrication des nanotubes

### Exemple comparatif 7

On fabrique des nanotubes multi-parois en utilisant le catalyseur de l'exemple comparatif 1 à 2,6 % Fe/Al₂O₃. Dans cet essai, la quantité de catalyseur a été volontairement diminuée de façon à ne pas obtenir des rendements importants, et ce, de façon à mieux cerner l'influence de la méthode de préparation du catalyseur. Les différents paramètres sont ajustés comme suit:
Mc = 5 g,
Tn = 750 °C,
Q_{T} = 320 cm³/min
Quantité de carbone introduite = 3 g,
tₙ = 60 min,

Dans ces conditions, la masse de carbone déposé est 0,16 g, qui est à comparer au résultat obtenu dans l'essai 5 de l'exemple 12 (même pourcentage de fer et conditions identiques), soit 1,57 g. La hauteur du lit reste sensiblement la même alors qu'elle passe de 1cm environ à 8,7cm dans l'essai 5 de l'exemple 12. Les analyses MEB et MET montrent que les nanotubes multi-parois ne constituent qu'une partie du dépôt et que les particules encapsulées sont dans ce cas très nombreuses. Ainsi, seule une composition catalytique selon l'invention permet la fabrication sélective de nanotubes multi-parois de dimensions moyennes homogènes.

### Exemple 8

On fabrique des nanotubes multi-parois en utilisant le catalyseur de l'exemple 2 à 2,6 % Fe/Al₂O₃ préparé sans utiliser d'eau pour activer la décomposition du précurseur. Dans cet essai, la quantité de catalyseur a été volontairement diminuée de façon à ne pas obtenir des rendements importants, et ce, de façon à mieux cerner l'influence de l'activation du catalyseur par l'eau. Les différents paramètres sont ajustés comme suit :
Mc = 5 g,
Tn = 750 °C,
Q_{T} = 320 cm³/min
Quantité de carbone introduite = 3 g,
tₙ = 60 min,

Dans ces conditions, la masse de carbone déposé est 0,88 g, qui est à comparer au résultat obtenu dans l'essai 5 de l'exemple 12 (même pourcentage de fer et conditions identiques, sauf l'addition d'eau), soit 1,57 g. L'activation du catalyseur par l'eau favorise donc l'obtention d'un rendement élevé en nanotubes.

Les analyses MEB et MET montrent que les nanotubes multi-parois constituent le seul produit de la réaction de dépôt.

### Exemple 9

On fabrique des nanotubes à partir du catalyseur de l'exemple 4 à 2,5 % Fe/Al₂O₃ et d'éthylène en utilisant le réacteur en inox de 5cm de diamètre interne. Cinq essais ont été réalisés dans les mêmes conditions de façon à vérifier la reproductibilité des résultats.

Les différents paramètres sont ajustés comme suit :
Mc = 100 g,
Tn = 650 °C
Q_{T} = 1200 cm³/min
Quantité de carbone introduite = 30 g,
tₙ = 120 min,

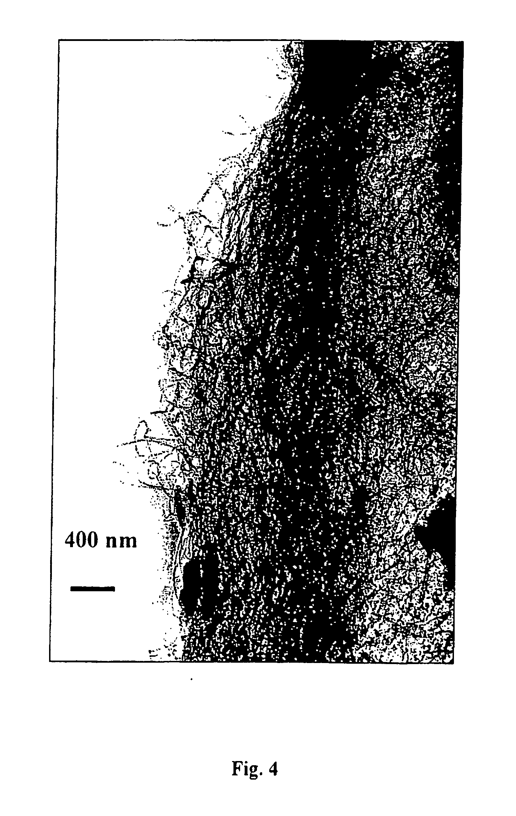

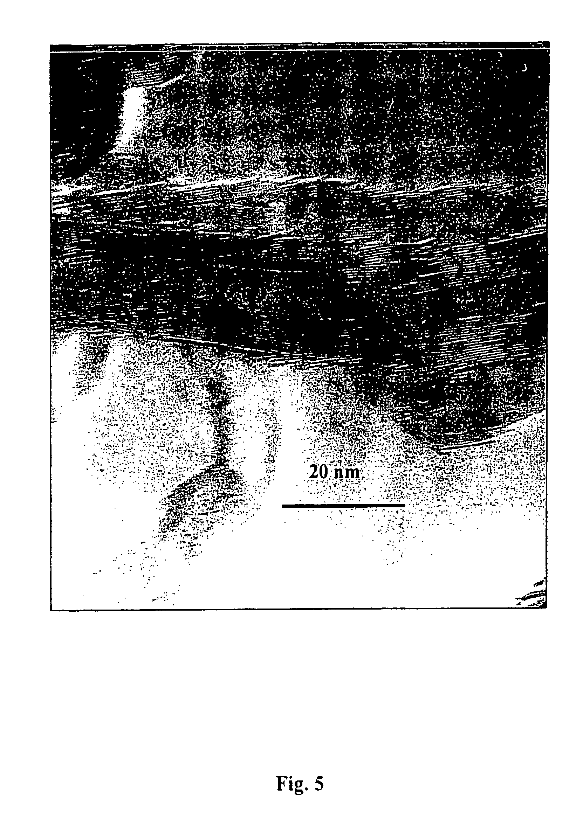

Dans ces conditions, la masse de carbone déposé est de 27±0,2 g dans tous les essais réalisés, soit un rendement de 90 % par rapport au carbone introduit. Les analyses MEB et MET montrent que les nanotubes multi-parois constituent le seul produit de la réaction. Le carbone pyrolitique ou les particules de métal encapsulées sont notablement absents du dépôt. Des micrographies TEM des nanotubes formés sont présentées sur les figures 4 et 5. Sur la figure 4, l'échelle donnée par le trait plein est de 400nm. Elle est de 20nm sur la figure 5. Le diamètre externe des nanotubes est de 20±5 nm et leur diamètre interne de 4±2 nm, ce qui correspond sensiblement à la dimension moyenne des particules métalliques. Les analyses DRX et Raman des nanotubes obtenus montrent le bon degré de graphitisation de ces derniers ; ceci est également visible sur la figure 5, où l'on peut observer les plans du graphite.

### Exemple 10

On fabrique des nanotubes à partir du catalyseur de l'exemple 4 à 2,5 % Fe/Al₂O₃ et d'éthylène en utilisant le réacteur en inox de 5 cm de diamètre interne.

Les différents paramètres sont ajustés comme suit :
Mc = 100 g,
Tn = 650 °C
Q_{T} = 1200 cm³/min
Quantité de carbone introduite = 45 g,
tₙ = 180 min,

Dans ces conditions, la masse de carbone déposé est de 44g, soit un rendement de 97% par rapport au carbone introduit. Les analyses MEB et MET montrent que les nanotubes multi-parois constituent le seul produit de la réaction.

### Exemple 11

Une série d'essais a été réalisée dans le réacteur de 2,5 cm de diamètre, de façon à étudier l'influence de la quantité de métal sur la préparation de nanotubes multi-parois en utilisant les catalyseurs des exemples 3 à 6 et un catalyseur à 0,5% de fer préparé de façon similaire et de l'éthylène comme source de carbone. Dans ces essais, la quantité de catalyseur a été volontairement diminuée de façon à ne pas obtenir des rendements importants, et ce, de façon à mieux cerner l'influence de la quantité de métal.

Les différents paramètres sont ajustés comme suit :
Mc = 5 g,
Tn = 750 °C
Q_{T} = 320 cm³/min
Quantité de carbone introduite = 3 g,
tₙ = 60 min,

Les essais 1 à 5 de cet exemple sont résumés dans le tableau II ci-après.

**Tableau II**

| Essai | % Fe | Carbone déposé (g) | Hauteur de lit après dépôt (cm) | Observation TEM |
|---|---|---|---|---|
| 1 | 0,5 | 0,52 | 3,2 | Nanotubes multi-parois |
| 1 | 1,3 | 1,13 | 4 | Nanotubes multi-parois |
| 2 | 2,5 | 1,90 | 6,2 | Nanotubes multi-parois |
| 3 | 3,5 | 2,29 | 8,6 | Nanotubes multi-parois |
| 4 | 5,65 | 1,37 | 3 | Nanotubes + particules de fer encapsulé |

Les analyses MEB et MET montrent que les nanotubes multi-parois constituent le seul produit ou le produit largement majoritaire de la réaction de dépôt. Le carbone pyrolitique ou les particules de métal encapsulé sont notablement absents des essais 1 à 5. Dans l'essai 1, la concentration en fer étant basse (0,5%) le rendement en est fortement affecté. Dans l'essai 5, la concentration en fer étant haute, la taille des particules de fer est importante et l'on observe la formation de particules de fer encapsulé.

### Exemple 12

Une série d'essais a été réalisée dans le réacteur de 2,5 cm de diamètre, de façon à étudier l'influence de la température sur la préparation de nanotubes multi-parois en utilisant le catalyseur de l'exemple 4 à 2,5 % Fe/Al₂O₃ et de l'éthylène comme source de carbone. Dans ces essais, la quantité de catalyseur a été volontairement diminuée de façon à ne pas obtenir des rendements importants, et ce, de façon à mieux cerner l'influence de la température.

Les différents paramètres sont ajustés comme suit :
Mc = 5 g,
Tn = variable de 500 à 850°C
Q_{T} = 320 cm³/min
Quantité de carbone introduite = 3 g,
tₙ = 60 min,

Les essais 1 à 6 de cet exemple sont résumés dans le tableau III.

**Tableau III**

| Essai | Température (°C) | Carbone déposé (g) | Hauteur de lit après dépôt (cm) | Observation TEM |
|---|---|---|---|---|
| 1 | 500 | 0,05 | 1,9 | Nanotubes multi-parois |
| 2 | 600 | 1,05 | 4,4 | Nanotubes multi-parois |
| 3 | 650 | 1,13 | 5,5 | Nanotubes multi-parois |
| 4 | 700 | 1,29 | 4,7 | Nanotubes multi-parois |
| 5 | 750 | 1,57 | 8,7 | Nanotubes multi-parois |
| 6 | 850 | 1,86 | 4,7 | Nanotubes + carbone pyrolitique + particules de fer encapsulé |

Les analyses MEB et MET montrent que les nanotubes multi-parois constituent le seul produit ou le produit largement majoritaire de la réaction de dépôt. Le carbone pyrolitique ou les particules de métal encapsulé sont notablement absents des essais 1 à 5. Dans l'essai 1, la température est trop basse pour que la réaction ne se fasse correctement. Dans l'essai 6, la température est trop haute et une décomposition thermique de l'éthylène conduit à la formation de carbone pyrolitique.

### Exemple 13

Cet exemple vise la préparation de nanotubes à partir du catalyseur de l'exemple 4 à 2,5% Fe/Al₂O₃ et d'éthylène en utilisant le réacteur de croissance en inox de 5cm de diamètre interne.

Les différents paramètres sont ajustés comme suit :
Mc = 100 g,
Tn = 650°C
Q_{T} = 1405 cm³/min
Quantité de carbone introduite = 48,5 g,
tₙ = 120 min,

Dans ces conditions, la masse de carbone déposé est de 46,2 g, soit un rendement de 95% par rapport au carbone introduit. Les analyses MEB et MET montrent que les nanotubes multi-parois constituent le seul produit de la réaction.

### Exemple 14

Cet exemple vise la préparation de nanotubes à partir d'un catalyseur à 0,5% Fe/Al₂O₃ préparé suivant le mode opératoire décrit dans l'exemple 4 et d'éthylène en utilisant le réacteur de croissance en inox de 5cm de diamètre interne.

Les différents paramètres sont ajustés comme suit :
Mc = 100 g,
Tn = 650°C
Q_{T} = 1405 cm³/min
Quantité de carbone introduite = 48,5 g,
tₙ = 120 min,

Dans ces conditions, la masse de carbone déposé est de 20.4 g, soit un rendement de 42% par rapport au carbone introduit. Les analyses MEB et MET montrent que les nanotubes multi-parois constituent le seul produit de la réaction. Cet exemple confirme les mauvaises performances du catalyseur à 0,5% de fer.

### Exemple 15

Cet exemple vise la purification de nanotubes produits à partir d'un catalyseur à 2,5% Fe/Al₂O₃ et d'éthylène en utilisant le réacteur de croissance en inox de 5cm de diamètre interne suivant le mode opératoire décrit dans l'exemple 9. La poudre solide issue du réacteur est introduite dans un ballon de 2ℓ en présence de 500ml d'eau et 500ml d'acide sulfurique à 98%.

Les différents paramètres sont ajustés comme suit :
M(poudre de nanotube + catalyseur) = 75 g,
V(H₂O) = 500ml,
V(H₂SO₄, 98%) = 500ml,
T = 140°C,
tₙ = 120 min.

Après deux heures de réaction de dissolution de l'alumine par l'acide, la solution est filtrée, les nanotubes sont lavés à l'eau plusieurs fois et séchés à l'étuve. Le produit sec (analyse thermogravimétrique) est constitué de 97% en masse de nanotubes de carbone et de 3% de fer.

## Revendications

1. Procédé de fabrication sélective de nanotubes de carbone ordonné par décomposition d'une source de carbone à l'état gazeux mise en contact d'au moins un catalyseur solide sous forme de particules métalliques comprenant au moins un métal de transition portées par des grains de support solide, dits grains de catalyseur, adaptés pour pouvoir former un lit fluidisé, les particules métalliques ayant une dimension moyenne comprise entre 1nm et 10nm, telle que mesurée après activation par chauffage à 750°C, dans lequel on réalise un lit fluidisé des grains de catalyseur dans un réacteur, dit réacteur de croissance (30), et on délivre en continu la source de carbone dans le réacteur de croissance (30) au contact des grains de catalyseur dans des conditions propres à assurer la fluidisation du lit de grains de catalyseur, la réaction de décomposition et la formation de nanotubes,
**caractérisé en ce que** :
- on fabrique au préalable les grains de catalyseur de chaque catalyseur par dépôt de particules métalliques sur des grains de support dans un lit fluidisé des grains de support réalisé dans un réacteur, dit réacteur de dépôt (20) alimenté par au moins un précurseur apte à former les particules métalliques, et de façon à obtenir des grains de catalyseur comprenant une proportion en poids des particules métalliques comprise entre 1% et 5%,
- on place ensuite les grains de catalyseur dans le réacteur de croissance (30) sans mise en contact avec l'atmosphère extérieure, puis on réalise le lit fluidisé des grains de catalyseur et la formation de nanotubes dans le réacteur de croissance (30).

2. Procédé selon la revendication 1, **caractérisé en ce qu'**on fabrique les grains de catalyseur avec une dimension moyenne des particules métalliques comprise entre 2nm et 8nm et dans lesquels, pour au moins 97% en nombre des particules métalliques, la différence entre leur dimension et la dimension moyenne des particules métalliques est inférieure ou égale à 5nm.

3. Procédé selon l'une des revendications 1 ou 2, **caractérisé en ce qu'**on fabrique les grains de catalyseur avec une dimension moyenne des particules de l'ordre de 4nm à 5nm, et dans lesquels, pour au moins 97% en nombre des particules métalliques, la différence entre leur dimension et la dimension moyenne des particules métalliques est de l'ordre de 3nm.

4. Procédé selon l'une des revendications 1 à 3, **caractérisé en ce qu'**on fabrique les grains de catalyseur avec une dimension des particules métalliques inférieure à 50nm.

5. Procédé selon l'une des revendications 1 à 4, **caractérisé en ce qu'**on place le lit fluidisé dans le réacteur de croissance (30) à une température comprise entre 600°C et 800°C.

6. Procédé selon l'une des revendications 1 à 5, **caractérisé en ce que** les particules métalliques sont constituées à au moins 98% en poids d'au moins un métal de transition et sont sensiblement exemptes d'éléments non métalliques autres que des traces de carbone et/ou d'oxygène et/ou d'hydrogène et/ou d'azote.

7. Procédé selon l'une des revendications 1 à 6, **caractérisé en ce que** les particules métalliques sont constituées d'un dépôt métallique pur d'au moins un métal de transition.

8. Procédé selon l'une des revendications 1 à 7, **caractérisé en ce qu'**on fabrique les grains de catalyseur avec une dimension moyenne comprise entre 10µ et 1000µ.

9. Procédé selon l'une dès revendications 1 à 8, **caractérisé en ce que** la différence entre la dimension des grains de catalyseur et la dimension moyenne des grains de catalyseur fabriqués est inférieure à 50% de la valeur de ladite dimension moyenne.

10. Procédé selon l'une des revendications 1 à 9, **caractérisé en ce que** le support présente une surface spécifique supérieure à 10m²/g.

11. Procédé selon l'une des revendications 1 à 10, **caractérisé en ce que** le support est un matériau poreux présentant une taille moyenne de pores supérieure à la dimension moyenne des particules métalliques.

12. Procédé selon l'une des revendications 1 à 11, **caractérisé en ce que** le support est choisi parmi l'alumine, un charbon actif, la silice, un silicate, la magnésie, l'oxyde de titane, la zircone, une zéolithe ou un mélange de grains de plusieurs de ces matériaux.

13. Procédé selon l'une des revendications 1 à 12, **caractérisé en ce que** les particules métalliques sont constituées de fer pur déposé à l'état dispersé sur des grains d'alumine.

14. Procédé selon l'une des revendications 1 à 13, **caractérisé en ce que** le réacteur de dépôt (20) et le réacteur de croissance (30) sont distincts.

15. Procédé selon la revendication 14, **caractérisé en ce qu'**on relie le réacteur de dépôt (20) et le réacteur de croissance (30) par au moins une conduite étanche (25a, 26, 25b) et **en ce qu'**on alimente le réacteur de croissance (30) en grains de catalyseur par cette conduite (25).

16. Procédé selon l'une des revendications 1 à 15, **caractérisé en ce qu'**on fabrique les grains de catalyseur par dépôt chimique en phase vapeur des particules métalliques sur les grains de support dans un lit fluidisé des grains de support dans le réacteur de dépôt (20).

17. Procédé selon l'une des revendications 1 à 16, **caractérisé en ce qu'**on réalise le dépôt des particules sur les grains de support à une température comprise entre 200°C et 300°C.

18. Procédé selon l'une des revendications 1 à 17, **caractérisé en ce qu'**on alimente le lit fluidisé des grains de support dans le réacteur de dépôt (20) par au moins un précurseur organométallique.

19. Procédé selon la revendication 18, **caractérisé en ce qu'**on utilise Fe(CO)₅ à titre de précurseur organométallique.

20. Procédé selon l'une des revendications 1 à 19, **caractérisé en ce qu'**on dilue en continu le(s) précurseur(s) à l'état de vapeurs dans un mélange gazeux que l'on délivre en continu dans le réacteur de dépôt (20) dans des conditions propres à assurer la fluidisation des grains de support.

21. Procédé selon la revendication 20, **caractérisé en ce que** le mélange gazeux comprend un gaz neutre et au moins un gaz réactif.

22. Procédé selon la revendication 21, **caractérisé en ce qu'**on utilise de la vapeur d'eau à titre de gaz réactif.

23. Procédé selon l'une des revendications 1 à 22, **caractérisé en ce qu'**on réalise le lit fluidisé des grains de catalyseur dans un réacteur de croissance (30) cylindrique de diamètre supérieur à 2cm et présentant une hauteur de parois apte à contenir 10 à 20 fois le volume du lit initial non fluidisé des grains de catalyseur tel que déterminé en l'absence de toute alimentation gazeuse.

24. Procédé selon l'une des revendications 1 à 23, **caractérisé en ce qu'**on réalise un lit fluidisé des grains de catalyseur dans le réacteur de croissance (30) en régime de bullage au moins sensiblement exempt de renardage.

25. Procédé selon l'une des revendications 1 à 24, **caractérisé en ce que** pour réaliser le lit fluidisé de grains de catalyseur dans le réacteur de croissance (30) :
- on forme un lit de grains de catalyseur dans le fond du réacteur de croissance (30),
- on alimente le réacteur de croissance (30) sous le lit de grains de catalyseur avec au moins un gaz dont la vitesse est supérieure à la vitesse minimale de fluidisation du lit de grains de catalyseur et inférieure à la vitesse minimale d'apparition d'un régime piston.

26. Procédé selon l'une des revendications 1 à 25, **caractérisé en ce que** pour réaliser le lit fluidisé des grains de catalyseur dans le réacteur de croissance (30), on alimente le réacteur de croissance (30) sous les grains de catalyseur avec la source de carbone à l'état gazeux, et au moins un gaz vecteur neutre.

27. Procédé selon l'une des revendications 1 à 26, **caractérisé en ce qu'**on alimente le réacteur de croissance avec au moins un précurseur carboné formant la source de carbone, au moins un gaz réactif, et au moins un gaz neutre, que l'on mélange avant introduction dans le réacteur de croissance (30).

28. Procédé selon l'une des revendications 1 à 27, **caractérisé en ce que** la source de carbone comprend au moins un précurseur carboné choisi parmi les hydrocarbures.

29. Procédé selon l'une des revendications 1 à 28, **caractérisé en ce qu'**on alimente le réacteur de croissance (30) avec de l'hydrogène à titre de gaz réactif.

30. Procédé selon l'une des revendications 27 à 29, **caractérisé en ce que** le rapport molaire du(des) gaz réactif(s) sur le(les) précurseur(s) carboné(s) est supérieur à 0,5 et inférieur à 10 -notamment de l'ordre de 3-.

31. Procédé selon l'une des revendications 27 à 30, **caractérisé en ce qu'**on alimente le réacteur de croissance (30) avec un débit de précurseur(s) carboné(s) compris entre 5% et 80% -notamment de l'ordre de 25%- du débit total gazeux.

## Claims

1. Process for the selective production of ordered carbon nanotubes by decomposition of a source of carbon in the gaseous state in contact with at least one solid catalyst in the form of metallic particles comprising at least one transition metal carried on granules of solid support, so-called catalyst granules, capable of being able to form a fluidised bed, the metallic particles having a mean dimension between 1 nm and 10 nm as measured after activation by heating to 750°C, in which a fluidised bed of the catalyst granules is formed in a reactor, the so-called growth reactor (30), and the carbon source is added continuously to the growth reactor (30) in contact with the catalyst granules under conditions capable of ensuring the fluidisation of the bed of catalyst granules, the decomposition reaction and the formation of nanotubes, **characterised in that**:
- the catalyst granules of each catalyst are produced beforehand by deposition of metallic particles on support granules in a fluidised bed of the support granules formed in a reactor, the so-called deposition reactor (20), fed with at least one precursor capable of forming the metallic particles, and so as to obtain catalyst granules comprising a proportion by weight of the metallic particles of between 1% and 5%,
- the catalyst granules are then placed in the growth reactor (30) without contact with the external atmosphere, followed by the formation of the fluidised bed of the catalyst granules and the formation of nanotubes in the growth reactor (30).

2. Process according to claim 1, **characterised in that** the catalyst granules are produced having a mean dimension of the metallic particles of between 2 nm and 8 nm, and in which, for at least 97% by number of the metallic particles, the difference between their dimension and the mean dimension of the metallic particles is less than or equal to 5 nm.

3. Process according to one of claims 1 and 2, **characterised in that** the catalyst granules are produced with a mean dimension of the particles of the order of 4 nm to 5 nm, and in which, for at least 97% by number of the metallic particles, the difference between their dimension and the mean dimension of the metallic particles is of the order of 3 nm.

4. Process according to one of claims 1 to 3, **characterised in that** the catalyst granules are produced with a dimension of the metallic particles of less than 50 nm.

5. Process according to one of claims 1 to 4, **characterised in that** the fluidised bed is situated in the growth reactor (30) at a temperature between 600°C and 800°C.

6. Process according to one of claims 1 to 5, **characterised in that** the metallic particles consist in an amount of at least 98% by weight of at least one transition metal and are substantially free of non-metallic elements apart from traces of carbon and/or oxygen and/or hydrogen and/or nitrogen.

7. Process according to one of claims 1 to 6, **characterised in that** the metallic particles consist of a pure metallic deposit of at least one transition metal.

8. Process according to one of claims 1 to 7, **characterised in that** the catalyst granules are produced with a mean dimension between 10 µ and 1000 µ.

9. Process according to one of claims 1 to 8, **characterised in that** the difference between the dimension of the catalyst granules and the mean dimension of the produced catalyst granules is less than 50% of the value of the said mean dimension.

10. Process according to one of claims 1 to 9, **characterised in that** the support has a specific surface greater than 10 m2/g.

11. Process according to one of claims 1 to 10, **characterised in that** the support is a porous material having a mean pore size greater than the mean dimension of the metallic particles.

12. Process according to one of claims 1 to 11, **characterised in that** the support is chosen from alumina, an activated carbon, silica, a silicate, magnesia, titanium dioxide, zirconia, a zeolite or a mixture of granules of several of these materials.

13. Process according to one of claims 1 to 12, **characterised in that** the metallic particles consist of pure iron deposited in the dispersed state on alumina granules.

14. Process according to one of claims 1 to 13, **characterised in that** the deposition reactor (20) and the growth reactor (30) are different.

15. Process according to claim 14, **characterised in that** the deposition reactor (20) and the growth reactor (30) are joined by at least one gas-tight line (25a, 26, 25b) and wherein the growth reactor (30) is fed with catalyst granules through this line (25).

16. Process according to one of claims 1 to 15, **characterised in that** the catalyst granules are produced by chemical deposition in the vapour phase of the metallic particles on the support granules in a fluidised bed of the support granules in the deposition reactor (20).

17. Process according to one of claims 1 to 16, **characterised in that** the deposition of the particles on the support granules is carried out at a temperature between 200°C and 300°C.

18. Process according to one of claims 1 to 17, **characterised in that** the fluidised bed of the support granules in the deposition reactor (20) is fed with at least one organometallic precursor.

19. Process according to claim 18, **characterised in that** Fe(CO)₅ is used as organometallic precursor.

20. Process according to one of claims 1 to 19, **characterised in that** the precursor(s) is continuously diluted in the vapour phase in a gaseous mixture that is continuously fed to the deposition reactor (20) under conditions suitable for ensuring the fluidisation of the support granules.

21. Process according to claim 20, **characterised in that** the gaseous mixture comprises a neutral gas and at least one reactive gas.

22. Process according to claim 21, **characterised in that** steam is used as reactive gas.

23. Process according to one of claims 1 to 22, **characterised in that** the fluidised bed of the catalyst granules is formed in a cylindrical growth reactor (30) of diameter greater than 2 cm and having a wall height capable of containing 10 to 20 times the volume of the initial, non-fluidised bed of the catalyst granules as measured in the absence of any gaseous feed.

24. Process according to one of claims 1 to 23, **characterised in that** a fluidised bed of the catalyst granules is formed in the growth reactor (30) under a bubbling régime that is at least substantially free of leakage.

25. Process according to one of claims 1 to 24, **characterised in that** in order to form the fluidised bed of catalyst granules in the growth reactor (30):
- a bed of catalyst granules is formed in the bottom of the growth reactor (30),
- the growth reactor (30) is fed from underneath the bed of catalyst granules with at least one gas whose velocity is greater than the minimum velocity of fluidisation of the bed of catalyst granules and less than the minimum velocity for the occurrence of a plunger-type régime.

26. Process according to one of claims 1 to 25, **characterised in that** in order to form the fluidised bed of the catalyst granules in the growth reactor (30), the growth reactor (30) is fed from underneath the catalyst granules with the carbon source in the gaseous state and with at least one neutral carrier gas.

27. Process according to one of claims 1 to 26, **characterised in that** the growth reactor is fed with at least one carbon-containing precursor forming the carbon source, with at least one reactive gas and with at least one neutral gas, which are mixed before being introduced into the growth reactor (30).

28. Process according to one of claims 1 to 27, **characterised in that** the carbon source comprises at least one carbon-containing precursor chosen from hydrocarbons.

29. Process according to one of claims 1 to 28, **characterised in that** the growth reactor (30) is fed with hydrogen as reactive gas.

30. Process according to one of claims 27 to 29, **characterised in that** the molar ratio of the reactive gas(es) to the carbon-containing precursor(s) is greater than 0.5 and less than 10, and in particular is of the order of 3.

31. Process according to one of claims 27 to 30, **characterised in that** the growth reactor (30) is fed at a flow rate of carbon-containing precursor(s) of between 5% and 80%, in particular of the order of 25%, of the overall gaseous flow rate.

## Patentansprüche

1. Verfahren zur selektiven Herstellung von geordneten Kohlenstoffnanoröhren durch Aufschließen einer Kohlenstoffquelle im gasförmigen Zustand in Kontakt mit wenigstens einem Feststoffkatalysator in der Form von Metallpartikeln, umfassend wenigstens ein Übergangsmetall, das von festen Trägerkörnern, Katalysatorkörner genannt, getragen wird, die ein Fließbett bilden können, wobei die Metallpartikel eine mittlere Größe zwischen 1 nm und 10 nm haben, gemessen nach der Aktivierung durch Erhitzung auf 750°C, wobei ein Fließbett mit Katalysatorkörnern in einem Reaktor, Wachstumsreaktor (30) genannt, realisiert und die Kohlenstoffquelle im Wachstumsreaktor (30) kontinuierlich in Kontakt mit Katalysatorkörnern unter Bedingungen gebracht wird, die zum Gewährleisten der Fluidisation der Katalysatorkörnerschicht, der Aufschlussreaktion und der Bildung von Nanoröhren geeignet sind,
**dadurch gekennzeichnet, dass**:
- zuvor die Katalysatorkörner von jedem Katalysator durch Ablagerung von Metallpartikeln auf Trägerkörnern in einem Fließbett mit in einem Reaktor, Ablagerungsreaktor (20) genannt, realisierten Trägerkörnern hergestellt werden, der mit wenigstens einem Präkursor gespeist wird, der die Metallpartikel bilden kann, und auf eine solche Weise, dass Katalysatorkörner erhalten werden, die Metallpartikel im Gewichtsverhältnis zwischen 1% und 5% enthalten,
- danach die Katalysatorkörner in den Wachstumsreaktor (30) ohne Kontakt mit der Außenatmosphäre gebracht werden und dann das Fließbett mit Katalysatorkörnern realisiert wird und Nanoröhren im Wachstumsreaktor (30) gebildet werden.

2. Verfahren nach Anspruch 1, **dadurch gekennzeichnet, dass** die Katalysatorkörner mit einer mittleren Metallpartikelgröße zwischen 2 nm und 8 nm hergestellt werden, wobei für wenigstens 97% der Zahl der Metallpartikel die Differenz zwischen ihrer Größe und der mittleren Metallpartikelgröße gleich oder kleiner als 5 nm ist.

3. Verfahren nach Anspruch 1 oder 2, **dadurch gekennzeichnet, dass** die Katalysatorkörner mit einer mittleren Partikelgröße von etwa 4 nm bis 5 nm hergestellt werden, wobei für wenigstens 97% der Zahl der Metallpartikel die Differenz zwischen ihrer Größe und der mittleren Metallpartikelgröße bei etwa 3 nm liegt.

4. Verfahren nach einem der Ansprüche 1 bis 3, **dadurch gekennzeichnet, dass** die Katalysatorkörner mit einer Metallpartikelgröße von weniger als 50 nm hergestellt werden.

5. Verfahren nach einem der Ansprüche 1 bis 4, **dadurch gekennzeichnet, dass** das Fließbett im Wachstumsreaktor (30) auf eine Temperatur zwischen 600°C und 800°C gebracht wird.

6. Verfahren nach einem der Ansprüche 1 bis 5, **dadurch gekennzeichnet, dass** die Metallpartikel zu wenigstens 98 Gew.-% aus wenigstens einem Übergangsmaterial bestehen und im Wesentlichen frei von anderen nichtmetallischen Elementen als Spuren von Kohlenstoff und/oder Sauerstoff und/oder Wasserstoff und/oder Stickstoff sind.

7. Verfahren nach einem der Ansprüche 1 bis 6, **dadurch gekennzeichnet, dass** die Metallpartikel durch reine Metallablagerung von wenigstens einem Übergangsmetall gebildet werden.

8. Verfahren nach einem der Ansprüche 1 bis 7, **dadurch gekennzeichnet, dass** die Katalysatorkörner mit einer mittleren Größe zwischen 10 und 1000 µ hergestellt werden.

9. Verfahren nach einem der Ansprüche 1 bis 8, **dadurch gekennzeichnet, dass** die Differenz zwischen der Größe der Katalysatorkörner und der mittleren Größe der hergestellten Katalysatorkörner weniger als 50% des Wertes der genannten mittleren Größe beträgt.

10. Verfahren nach einem der Ansprüche 1 bis 9, **dadurch gekennzeichnet, dass** der Träger eine spezifische Oberfläche von mehr als 10 m²/g hat.

11. Verfahren nach einem der Ansprüche 1 bis 10, **dadurch gekennzeichnet, dass** der Träger ein poröses Material mit einer mittleren Porengröße ist, die größer ist als die mittlere Metallpartikelgröße.

12. Verfahren nach einem der Ansprüche 1 bis 11, **dadurch gekennzeichnet, dass** der Träger ausgewählt wird aus Aluminiumoxid, Aktivkohle, Siliciumdioxid, einem Silicat, Magnesia, Titanoxid, Zirkoniumdioxid, einem Zeolith oder einem Gemisch aus Körnern von mehreren dieser Stoffe.

13. Verfahren nach einem der Ansprüche 1 bis 12, **dadurch gekennzeichnet, dass** die Metallpartikel aus reinem Eisen gebildet werden, das sich im dispergierten Zustand auf Aluminiumoxidkörnern abgelagert hat.

14. Verfahren nach einem der Ansprüche 1 bis 13, **dadurch gekennzeichnet, dass** der Ablagerungsreaktor (20) und der Wachstumsreaktor (30) sich voneinander unterscheiden.

15. Verfahren nach Anspruch 14, **dadurch gekennzeichnet, dass** der Ablagerungsreaktor (20) und der Wachstumsreaktor (30) durch wenigstens einen dichten Kanal (25a, 26, 25b) miteinander verbunden sind und dadurch, dass der Wachstumsreaktor (30) durch diesen Kanal (25) mit Katalysatorkörnern gespeist wird.

16. Verfahren nach einem der Ansprüche 1 bis 15, **dadurch gekennzeichnet, dass** die Katalysatorkörner durch Dampfphasenablagerung von Metallpartikeln auf die Trägerkörner in einem Fließbett von Trägerkörnern im Ablagerungsreaktor (20) hergestellt werden.

17. Verfahren nach einem der Ansprüche 1 bis 16, **dadurch gekennzeichnet, dass** die Partikelablagerung auf die Trägerkörner bei einer Temperatur zwischen 200°C und 300°C erfolgt.

18. Verfahren nach einem der Ansprüche 1 bis 17, **dadurch gekennzeichnet, dass** das Fließbett von Trägerkörnern in dem Ablagerungsreaktor (20) mit wenigstens einem metallorganischen Präkursor gespeist wird.

19. Verfahren nach Anspruch 18, **dadurch gekennzeichnet, dass** Fe(CO)₅ als metallorganischer Präkursor verwendet wird.

20. Verfahren nach einem der Ansprüche 1 bis 19, **dadurch gekennzeichnet, dass** der/die Präkursor(en) im Dampfzustand in einem gasförmigen Gemisch verdünnt wird/werden, das kontinuierlich in den Ablagerungsreaktor (20) unter Bedingungen geleitet wird, die zum Gewährleisten der Fluidisation von Trägerkörnern geeignet sind.

21. Verfahren nach Anspruch 20, **dadurch gekennzeichnet, dass** das gasförmige Gemisch ein neutrales Gas und wenigstens ein reaktionsfähiges Gas umfasst.

22. Verfahren nach Anspruch 21, **dadurch gekennzeichnet, dass** Wasserdampf als reaktionsfähiges Gas verwendet wird.

23. Verfahren nach einem der Ansprüche 1 bis 22, **dadurch gekennzeichnet, dass** das Fließbett von Katalysatorkörnern in einem zylindrischen Wachstumsreaktor (30) mit einem Durchmesser von mehr als 2 cm realisiert wird, der eine Wandhöhe hat, die geeignet ist, um das 10- bis 20fache des Volumens des nicht fluidisierten Anfangsbettes von Katalysatorkörnern aufzunehmen, ermittelt in Abwesenheit von jeglicher Gaseinspeisung.

24. Verfahren nach einem der Ansprüche 1 bis 23, **dadurch gekennzeichnet, dass** ein Fließbett von Katalysatorkörnern im Wachstumsreaktor (30) unter Blasenbildung im Wesentlichen ohne Röhrenbildung erfolgt.

25. Verfahren nach einem der Ansprüche 1 bis 24, **dadurch gekennzeichnet, dass** zum Realisieren des Fließbettes von Katalysatorkörnern im Wachstumsreaktor (30):
- ein Bett von Katalysatorkörnern im Boden des Wachstumsreaktors (30) gebildet wird,
- der Wachstumsreaktor (30) unter dem Bett von Katalysatorkörnern mit wenigstens einem Gas gespeist wird, dessen Geschwindigkeit höher ist als die minimale Fluidisationsgeschwindigkeit des Bettes von Katalysatorkörnern und kleiner ist als die minimale Entstehungsgeschwindigkeit eines Kolbenbetriebs.

26. Verfahren nach einem der Ansprüche 1 bis 25, **dadurch gekennzeichnet, dass** zum Realisieren des Fließbettes von Katalysatorkörnern im Wachstumsreaktor (30) dieser unter den Katalysatorkörnern mit der Kohlenstoffquelle im gasförmigen Zustand und mit wenigstens einem neutralen Vektorgas gespeist wird.

27. Verfahren nach einem der Ansprüche 1 bis 26, **dadurch gekennzeichnet, dass** der Wachstumsreaktor mit wenigstens einem die Kohlenstoffquelle bildenden kohlenstoffhaltigen Präkursor, wenigstens einem reaktionsfähigen Gas und wenigstens einem neutralen Gas gespeist wird, die vor der Einleitung in den Wachstumsreaktor (30) gemischt werden.

28. Verfahren nach einem der Ansprüche 1 bis 27, **dadurch gekennzeichnet, dass** die Kohlenstoffquelle wenigstens einen aus Kohlenwasserstoffen ausgewählten kohlenstoffhaltigen Präkursor umfasst.

29. Verfahren nach einem der Ansprüche 1 bis 28, **dadurch gekennzeichnet, dass** der Wachstumsreaktor (30) mit Wasserstoff als reaktionsförmigem Gas gespeist wird.

30. Verfahren nach einem der Ansprüche 27 bis 29, **dadurch gekennzeichnet, dass** das Molverhältnis des/der reaktionsfähigen Gase(s) auf dem/den kohlenstoffhaltigen Präkursor(n) größer als 0,5 und kleiner als 10 ist und insbesondere bei etwa 3 liegt.

31. Verfahren nach einem der Ansprüche 27 bis 30, **dadurch gekennzeichnet, dass** der Wachstumsreaktor (30) mit einem Anteil an kohlenstoffhaltigem/-n Präkursor(n) zwischen 5% und 80%, insbesondere von etwa 25%, des gesamten gasförmigen Anteils beschickt wird.
